# FASCICULE DE BREVET EUROPEEN

(11) **EP 2 741 847 B1**
(45) Date de publication et mention de la délivrance du brevet: **17.05.2017**
(21) Numéro de dépôt: 12769487.5
(22) Date de dépôt: 09.08.2012
(51) Int. Cl.: B01F 17/00, B01D 17/04

(54) **NOUVEAU PROCÉDÉ DE DÉSTABILISATION D'UNE ÉMULSION DE PICKERING**
NEUES VERFAHREN ZUR DESTABILISIERUNG EINER PICKERING-EMULSION
NOVEL METHOD FOR DESTABILISING A PICKERING EMULSION

(30) Priorité: 11.08.2011 FR 1157303
(43) Date de publication de la demande: 18.06.2014
(73) Titulaire: Commissariat à l'Énergie Atomique et aux Énergies Alternatives, 75015 Paris (FR)
(72) Inventeur: MALLOGGI, Florent, F-75013 Paris (FR); THILL, Antoine, F-92260 Fontenay aux Roses (FR); FOUILLOUX, Sarah, F-60240 Le Mesnil Théribus (FR)
(74) Mandataire: Gevers & Orès
(86) Numéro de dépôt international: PCT/IB2012/054067
(87) Numéro de publication internationale: WO 2013/021362

(56) Documents cités:
- FUJII ET AL: "Hydroxyapatite nanoparticles as stimulus-responsive particulate emulsifiers and building block for porous materials", JOURNAL OF COLLOID AND INTERFACE SCIENCE, ACADEMIC PRESS, NEW YORK, NY, US, vol. 315, no. 1, 18 septembre 2007 (2007-09-18), pages 287-296, XP022258540, ISSN: 0021-9797, DOI: 10.1016/J.JCIS.2007.06.071
- FREDRICK E ET AL: "Factors governing partial coalescence in oil-in-water emulsions", ADVANCES IN COLLOID AND INTERFACE SCIENCE, ELSEVIER, NL, vol. 153, no. 1-2, 15 janvier 2010 (2010-01-15), pages 30-42, XP026887243, ISSN: 0001-8686, DOI: 10.1016/J.CIS.2009.10.003 [extrait le 2009-10-24]
- YANG ET AL: "Effect of dispersion pH on the formation and stability of Pickering emulsions stabilized by layered double hydroxides particles", JOURNAL OF COLLOID AND INTERFACE SCIENCE, ACADEMIC PRESS, NEW YORK, NY, US, vol. 306, no. 2, 23 décembre 2006 (2006-12-23), pages 285-295, XP005733261, ISSN: 0021-9797, DOI: 10.1016/J.JCIS.2006.10.062
- C. P. WHITBY ET AL.: "Shear-induced coalescnece of oil-in-water Pickering emulsions", JOURNAL OF COLLOID AND INTERFACE SCIENCE, vol. 361, 23 mai 2011 (2011-05-23), pages 170-177, XP002672531,

## Description

La présente invention est relative à un procédé de déstabilisation d'une émulsion de Pickering. Elle concerne également un procédé de séparation de phases, et plus particulièrement un procédé de séparation d'hydrocarbures pour l'extraction d'hydrocarbures, ainsi qu'un procédé de fabrication de substrats poreux et un procédé de fabrication de produits finis.

Les émulsions sont des systèmes incluant deux liquides non miscibles ou ayant une miscibilité très limitée l'un avec l'autre. L'un de ces liquides est une phase dispersée constituée de fines gouttelettes de phase organique dispersées dans une phase aqueuse continue. Bien que métastable, les émulsions peuvent rester stables pendant plusieurs mois ou plusieurs années grâce à l'incorporation de tensioactifs qui s'adsorbent aux interfaces des phases continue et dispersée, et inhibent ainsi la coalescence des gouttelettes. Les tensioactifs sont des molécules amphiphiles qui présentent une partie lipophile (qui retient les matières grasses) et apolaire, et une partie hydrophile (miscible dans l'eau) et polaire. Cette structure permet de modifier la tension superficielle entre la phase dispersée et la phase continue. L'utilisation de tensioactifs peut néanmoins avoir des effets négatifs sur l'environnement et la santé (irritation de la peau, toxicité). De plus, il faut une grande quantité de tensioactifs pour maintenir la stabilité de l'interface du fait des dynamiques rapides de sorption/désorption à l'interface.

Les tensioactifs peuvent être remplacés par des particules solides qui s'adsorbent à la surface des gouttelettes en créant une sorte de « bouclier de protection » qui stabilise l'émulsion : on parle alors d'émulsions de Pickering (W. Ramsden, Separation of Solids in the Surface-layers of Solutions and « Suspensions », June 8, 1903 ; H. E. Armstrong et al., Journal of the Chemical Society, Pickering : Emulsions, 1907). Ces émulsions sans tensioactif, peu toxiques, sont stabilisées par des particules colloïdales. Ces systèmes connaissent un regain d'intérêt, dans la mesure où il est aujourd'hui préférable, pour des raisons écologiques, de limiter l'utilisation des tensioactifs de synthèse.

Du fait de la présence de particules fortement ancrées aux interfaces, les émulsions de Pickering présentent des propriétés très originales comparées aux émulsions classiques. Les émulsions obtenues sont en effet beaucoup plus stables que leurs homologues stabilisés par des molécules tensioactives. Dans le cas classique des émulsions stabilisées par des molécules tensioactives les interfaces sont « liquides », tandis que dans le cas des émulsions de Pickering la présence de particules rend l'interface « solide » et très robuste. L'énergie libre de Gibbs nécessaire pour détacher les particules présentes à l'interface des émulsions est beaucoup plus importante que pour les tensioactifs (D. E. Tambe et al., Journal of colloid and interface science, 162, 1-10, 1994 ; Aveyard et al., Phys. Chem. Chem. Phys., 2003, 5, 2398-2409). C'est la raison pour laquelle ces particules sont irréversiblement « attachées » à l'interface (Aveyard *et al.*, 2003), à la différence des tensioactifs moléculaires qui sont toujours en équilibre entre l'interface et les phases en présence.

Ainsi, les particules adsorbées à l'interface confèrent aux émulsions de Pickering des propriétés macroscopiques originales telles que résistance à la déshydratation et élasticité exceptionnelle, ces propriétés étant liées à la nature solide de l'interface.

Contrairement aux molécules tensioactives qui s'adsorbent et se désorbent continuellement, dans le cas des émulsions de Pickering les particules s'adsorbent aux interfaces sous l'effet d'une agitation et de manière irréversible. Ainsi, une fois qu'une émulsion de Pickering est stable, il est difficile de la déstabiliser.

Il existe pourtant un intérêt à déstabiliser les émulsions de Pickering, ceci afin de mélanger des émulsions qui auraient été stockées sur une longue période ou encore pour séparer les phases en présence. La déstabilisation permet en effet de séparer les phases hydrophiles et hydrophobes, et la réutilisation de l'une ou bien des deux phases séparément. Les deux phases de l'émulsion de Pickering peuvent être utilisées pour stocker des molécules différentes (certaines hydrophiles, d'autres hydrophobes) dans un même contenant, sans qu'elles soient en contact l'une avec l'autre. La déstabilisation de l'émulsion permet, dans ce cas, la mise en contact des différentes molécules et conduit, par exemple, à des réactions chimiques qui confèrent de nouvelles propriétés au mélange.

Plusieurs méthodes de déstabilisation des émulsions de Pickering ont été décrites dans la littérature :
- *la déstabilisation par application d'un champ électrique extérieur* qui utilise un champ électrique pour déstabiliser l'émulsion de Pickering (Hwang et al., Electrophoresis 2010, 31, 850-859). Cette méthode nécessite la présence de particules diélectriques pour stabiliser l'émulsion. Le mécanisme de déstabilisation est basé sur la migration des particules sous l'action du champ électrique (diélectrophorèse), laissant ainsi des régions de l'interface libre de particules,
- *la déstabilisation par application d'un champ magnétique extérieur* :
   Melle et al. (Langmuir 2005, 21, 2158-2162) utilisent un champ magnétique pour déstabiliser une émulsion de Pickering de décane dans de l'eau (émulsion huile dans l'eau) comprenant des particules magnétiques. Au-delà d'une valeur de champ magnétique critique, l'émulsion se déstabilise et conduit à la formation de deux phases séparées,
- *la déstabilisation par utilisation de micro-ondes :* les micro-ondes peuvent dans certains cas s'avérer performantes pour démulsifier des émulsions de Pickering (Xia et al., Journal of Macramoleculer Science, Part A : Pure and Applied Chemistry, 43 :71-81, 2006). Toutefois, cette méthode ne permet pas d'obtenir une rupture totale de l'émulsion (82% au maximum, dans des conditions optimales),
- *la déstabilisation par effet de pH :* l'étude du comportement de microgels nanocomposites P4VP/SiO₂ en fonction du pH a montré que les particules ont une balance hydrophile/hydrophobe qui varie fortement en fonction du pH de l'émulsion (Fujii et al., Adv. Mater. 2005, 17, No. 8, April 18). Cette méthode s'applique néanmoins uniquement sur des particules très particulières, dont la balance hydrophile/hydrophobe varie fortement en fonction du pH. Fujii et al., Journal of Colloid and Interface Science, 315, 2007, 287-296, décrit également l'utilisation de nanoparticules d'hydroxyapatite (HAp, Ca₁₀(PO₄)₆(OH)₂) pour la préparation d'émulsions de Pickering, par déstabilisation par un abaissement du pH. L'addition d'acide conduit à la dissolution des nanoparticules d'HAp attachées à l'interface des deux phases (huile/eau), et ainsi à la déstabilisation de l'émulsion. Après la démulsification, les nanoparticules d'HAp peuvent précipiter par addition d'une base dans la phase aqueuse. Ce cycle d'émulsification-démulsification est réversible. Yang et al., Journal of Colloid and Interface Science, 306, 2007, 285-295, étudie également l'effet du pH sur la formation d'émulsions huile dans l'eau stabilisées par des particules d'hydroxydes double couche. La stabilité de l'émulsion est améliorée lorsque l'on augmente le pH et la concentration en particules, une plus grande quantité de particules étant alors absorbées à l'interface huile/eau,
- *la déstabilisation par application d'une force mécanique* (Subramaniam et al., Nature, Vol. 438, 15, December 2005) qui force la coalescence de bulles dans l'eau, mais sans permettre une rupture complète de l'émulsion. Whitby *et al.* étudie également l'effet du cisaillement sur la coalescence d'émulsions de Pickering huile dans l'eau comprenant des particules de silice silanisée.

Fredrick et al., Advances in Colloid and Interface Science, 153, 2010, 30-42, recense également différentes études sur le mécanisme de coalescence partielle d'émulsions alimentaires, et examine les paramètres susceptibles d'accélérer ou de retarder cette coalescence.

La coalescence bloquée est un phénomène qui se produit lorsque les gouttelettes sont stabilisées par des nanoparticules avec un taux de recouvrement proche de la saturation. Ce mécanisme a déjà été décrit par Studart et al. (J. Phys. Chem. B, Vol. 113, No. 12, 2009) : des gouttelettes de toluène dispersées dans de l'eau et stabilisées par un mélange de nanoparticules de silice et d'hexadécyltriméthylammonium de brome (CTAB) conduisent à une coalescence bloquée après que les gouttelettes de toluène se soient accumulées à l'interface eau/air. Les gouttelettes ne coalescent pas instantanément et conservent leur forme sphérique pendant quelques secondes. Toutefois, la manipulation/modification des gouttelettes doit se faire rapidement car au bout d'un bref laps de temps, les gouttelettes coalescent spontanément. Ainsi, il est difficile de contrôler l'arrangement spatial des gouttes au moment de la déstabilisation.

Les Inventeurs ont maintenant trouvé qu'il était possible de déstabiliser des émulsions de Pickering du type huile dans eau ou huile dans alcool de manière contrôlée, via un choc physico-chimique. Cette déstabilisation permet de contrôler l'arrangement spatial des gouttelettes et de figer cet arrangement par une coalescence bloquée après un temps variable et contrôlé, les gouttelettes pouvant ainsi être manipulées pendant une durée convenable. Le procédé objet de la présente invention permet soit l'obtention de gouttelettes non sphériques, l'assemblage de gouttes non sphériques permettant de produire des matériaux ayant une plus grande variété de propriétés optiques, soit la séparation (démixtion totale) des phases initiales.

L'invention a donc pour premier objet un procédé de déstabilisation d'une émulsion de Pickering comprenant les étapes suivantes :
(i) la préparation d'une émulsion de Pickering comprenant :
   - une phase continue dans laquelle des nanoparticules sont mises en suspension, et
   - une phase discontinue, qui est un liquide non miscible dispersé dans ladite phase continue sous forme de gouttelettes,
(ii) l'injection dans la phase continue d'un solvant miscible avec ladite phase continue, de manière à déclencher une coalescence entre les phases continue et discontinue,

le ratio en poids phase discontinue/nanoparticules étant compris entre 4 et 20 000, et de préférence entre 100 et 10 000.

Par définition, les émulsions de Pickering sont des dispersions de deux phases non miscibles sans tensioactif, stabilisés par des particules solides. Les particules sont fonctionnalisées pour leur conférer un caractère « amphiphile » et permettre leur adsorption aux interfaces.

Le terme émulsion se réfère quant à lui à un système hétérogène dans lequel un liquide non miscible (phase discontinue) est dispersé dans un autre liquide sous forme de gouttelettes. La taille des gouttelettes peut varier de 10 nm à quelques µm, par exemple 500 µm.

Au sens où l'entend l'invention, deux liquides sont dits miscibles lorsque leur mélange, quelque soit leurs proportions, conduit à l'obtention d'une phase unique homogène. Deux liquides sont dits non miscibles lorsque la dissolution du soluté dans le solvant est inférieure à 5% en poids de la quantité totale de soluté (dans des conditions de température et de pression ambiante).

La phase continue est choisie parmi l'eau ou un alcool de formule R-OH où R est une chaîne hydrocarbonée en C₁ à C₄.

La phase discontinue, aussi appelée « phase dispersée », peut être une huile minérale, une huile fluorée, un acide gras ou un oligomère (méth)acrylate.

Lorsque la phase discontinue est une huile minérale, elle peut être constituée d'un mélange d'hydrocarbures, et plus particulièrement d'un mélange d'alcanes de formule CₙH₂ₙ₊₂, d'alcènes de formule CₙH₂ₙ, d'alcynes de formule CₙH₂ₙ₋₂, dans lesquels n varie de 1 à 30, et de composés aromatiques, tels que des composés aromatiques monocycliques comme le benzène, le toluène, le xylène, etc, ou des composés polycycliques comme le naphtalène, l'anthracène, le phénantrène, etc. La phase discontinue peut être du pétrole.

Lorsque la phase discontinue est une huile fluorée, elle peut être choisie parmi les perfluoroalcanes, les perfluoroamines et les perfluoroéthers. De préférence, ladite huile fluorée peut être choisie parmi le perfluoropentane, le perfluorohexane, le perfluorotripropylamine et le perfluoropolyéther.

Lorsque la phase discontinue est un acide gras, ce dernier est de préférence choisie parmi les acides gras de formule R'-COOH où R' est une chaîne hydrocarbonée en C₁ à C₃₂, et de préférence en C₁₀ à C₁₈. Les acides gras les plus préférés sont l'acide oléique et l'acide tétradécanoïque.

Lorsque la phase discontinue est un oligomère (méth)acrylate, ce dernier est de préférence obtenu à partir d'un acide (méth)acrylique et d'un polyol di-, tri- ou tétra-hydroxylé. De manière avantageuse, l'oligomère (méth)acrylate est choisi parmi le tri(propylène glycol) diacrylate (TPGDA), l'éthylène glycol diméthacrylate, le poly(éthylène glycol) diacrylate (PEGDA), le pentaérythritol triacrylate, le triméthylolpropane triacrylate (TMPTA) et le 1,6-hexanediol diacrylate. Le polyéthylène glycol diacrylate et le 1,6-hexanediol diacrylate sont les oligomères (méth)acrylates les plus préférés. L'oligomère (méth)acrylate peut être utilisé en combinaison avec un photoinitiateur. On peut citer à titre d'exemples de photoinitiateurs : les α-dicétones, tels que le benzyle et le diacétyle ; les thioxanthones, telles que la thioxanthone, la 2,4-diéthylthioxanthone, l'acide thioxanthone-1-sulfonique, l'isopropyl-thioxanthone-4 sulfonique, l'isopropylthioxanthone et la 2-chlorothioxanthone ; les benzophénones, telle que la benzophénone, la 4,4-bis(diméthylamino)benzophénone, la 4,4'-bis(diéthyl-1-amino) benzophénone, la 4,4'-diéthylaminobenzophénone ; les propiophénones, telles que la 2-hydroxy-2-méthylpropiophénone, la 4'-isopropyl-2-hydroxy-2-méthyl propiophénone ; les acétophénones, telle que l'acétophénone, la p-diméthyl-aminoacétophénone, l'α,α'-diméthoxyacétoxyacétophénone, la 2,2-diméthoxy-2-phénylacétophénone, la p-méthoxy-acétophénone, la 2-méthyl-[4-(méthylthio)phényl]-2-morpholino-1-propanone, la 2,2-diéthoxyacétophénone, la 4'-phénoxy-2,2-dichloroacétophénone, la 2-benzyl-2-N,N-diméthylamino-1-(4-morpholinophényl)-butan-1-one, la 2,2-diméthoxy-2-phényl-acétophénone, la 2-hydroxy-2-méthyl-1-phénylpropanone ; les quinones, telles que l'anthraquinone, la 2-éthyl-anthraquinone, la 2-chloroanthraquinone, la 1,4-naphto-quinone ; les α-hydroxyarylcétones, telles que la 1-hydroxycyclohexylphénylcétone ; les composés halogénés, tels que le chlorure de phénacyle, la tribromométhylphénylsulfone ; les peroxydes comme le peroxyde de di-ter-butyle ; et d'autres composés comme le benzyle diméthylcétal, le N-diméthylaminobenzoate d'éthyle, la 2-hydroxy-2-méthyl-1-phényl propanone. Parmi les photoinitiateurs les plus préférés, on peut citer les propiophénones, et plus particulièrement la 2-hydroxy-2-méthylpropiophénone.

De manière avantageuse, le ratio en poids entre la phase continue et la phase discontinue varie de 1 à 50%.

La présente invention est indépendante du type de nanoparticules utilisées, ces dernières pouvant être choisies parmi les nanoparticules de silice, d'or, d'oxyde de fer, d'oxyde de cérium, de dioxyde de titane, d'argile et les quantums dots (cristaux semiconducteurs de dimensions nanométriques doués d'une très forte fluorescence). Toutefois, selon un mode de réalisation préféré, les nanoparticules sont des nanoparticules de silice, ces dernières étant couramment utilisées pour stabiliser les émulsions de Pickering. De manière avantageuse, les nanoparticules ont un diamètre compris entre 10 et 50 nm, et dé préférence entre 10 et 20 nm.

La concentration en nanoparticules exprimée en poids par rapport à la phase continue peut être comprise entre 0,1 et 20 g.L⁻¹, et de préférence entre 0,1 et 0,5 g.L⁻¹.

Pour que les nanoparticules stabilisent de manière satisfaisante les émulsions, l'hydrophobie des nanoparticules doit avoir été au préalable modifiée en surface, ceci afin d'améliorer leur adsorption à l'interface phase continue/phase discontinue. Par exemple, dans le cas des nanoparticules de silice, ces dernières peuvent être modifiées par éthérification des groupements silanols par un alcool comprenant une chaîne carbonée en C₄ à C₁₂ (formation d'un groupement Si-O-CH₂-), ou par greffage à la surface des nanoparticules d'un organosilane de formule RₙSiX₍₄₋ₙ₎ dans laquelle n = 1, 2 ou 3, X est un groupement hydrolysable tel qu'un groupement alcoxy, halogénure ou carboxylate et R est un groupement organique non hydrolysable pouvant être porteur d'une fonction pouvant réagir avec le milieu d'application tel qu'un groupe hydrocarboné linéaire ou cyclique en C₁ à C₈, et de préférence un groupe alkyle ou aromatique. Ledit organosilane est de préférence un organoalcoxysilane de formule RₙSi(OR')₍₄₋ₙ₎ dans laquelle n et R sont tels que mentionnés ci-dessus et R' est un groupe hydrocarboné linéaire ou cyclique en C₁ à C₈, et de préférence un groupe alkyle ou aromatique. Parmi les organoalcoxysilane les plus préférés, on peut mentionner le diéthoxydiméthylsilane, le triméthyléthoxysilane ou le tétraéthoxysilane. Le greffage des organosilanes est réalisé par catalyse basique : les nanoparticules sont mises en suspension aqueuse à un pH de 9-10, l'organosilane est ensuite ajoutée à la suspension, puis le mélange agité pendant une durée comprise entre 2 et 12 heures. Le taux de recouvrement des nanoparticules de silice par l'organosilane est caractérisé par le pourcentage de groupements silanols résiduels présents en surface après greffage (par comparaison avec la surface des nanoparticules non greffées). L'hydrophobie des nanoparticules varie en fonction de ce taux de recouvrement.

Dans le cas de nanoparticules de silice peu hydrophobes (nanoparticules peu greffées), c'est-à-dire ayant un taux de recouvrement compris entre 5 et 40%, la charge de surface des nanoparticules (charge électrique présente à l'interface) est relativement élevée. Dans ce cas, la phase continue est de préférence une phase aqueuse comprenant un sel, ledit sel favorisant l'adsorption des nanoparticules à la surface des gouttelettes. De préférence, le sel est le chlorure de sodium NaCl, le chlorure de magnésium MgCl₂ ou le chlorure de lithium LiCl. Ledit sel peut être utilisé en une quantité de 5 à 20 g.L⁻¹, et de préférence entre 10 et 20 g.L⁻¹.

Dans le cas de nanoparticules de silice moyennement ou fortement hydrophobes (nanoparticules moyennement ou fortement greffées), c'est-à-dire ayant un taux de recouvrement compris entre 40 et 85%, la charge de surface des nanoparticules est relativement faible. Dans ce cas, la phase continue est de préférence une suspension alcoolique comprenant un alcool de formule R-OH où R est une chaîne hydrocarbonée en C₁ à C₂₀, et de préférence en C₁ à C₁₂.

L'étape (i) consiste donc en la préparation d'une suspension de nanoparticules (phase continue + nanoparticules), puis à son mélange avec une phase discontinue, pour obtenir une émulsion de Pickering. Le mélange peut être réalisé par voie mécanique, par exemple en utilisant un homogénéiseur haute pression, un système à ultrasons ou un système microfluidique. La durée de l'agitation doit être suffisante pour permettre la fixation des nanoparticules à l'interface phase continue/phase discontinue, cette durée pouvant aller de 30 secondes à 10 minutes, et de préférence de 2 à 5 minutes. L'étape (i) est de préférence réalisée à température ambiante, c'est-à-dire à une température comprise entre 20 et 25°C.

La coalescence se produit lors d'une étape (ii) par injection d'un liquide miscible avec la phase continue. L'injection du solvant peut se faire soit par ajout simple à l'aide d'une micropipette, soit sous débit contrôlé à l'aide d'un pousse-seringue. La miscibilité dudit solvant dans la phase continue peut être caractérisée par un coefficient de partage Kₚ, *i.e.* le ratio entre la concentration du solvant dans la phase continue et la concentration du solvant dans la phase discontinue. Typiquement, ledit solvant présente un Kₚ au moins égal à 10.

L'injection d'un solvant miscible dans la phase continue lors d'une étape (ii) produit un choc physico-chimique qui conduit à la déstabilisation des gouttelettes qui sont dispersées dans la phase continue. Ainsi, la stabilisation des gouttelettes, garantie par un angle de contact particulier entre les deux phases et les nanoparticules, est rompue, ce qui provoque la coalescence des gouttelettes.

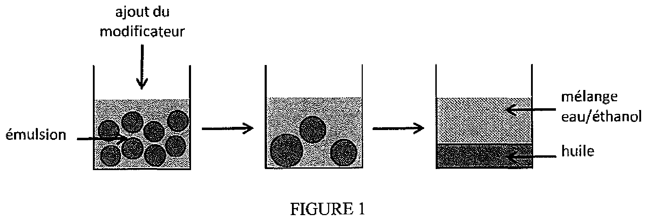

L'étape (ii) d'injection est de préférence réalisée à un débit compris entre 10⁻⁵ et 10⁻² m³/h, et de préférence entre 10⁻⁴ et 10⁻³ m³/h. Une légère agitation permet d'améliorer l'efficacité d'action du liquide miscible, toutefois cette agitation n'est pas indispensable à la rupture de l'émulsion. Le mécanisme de déclenchement de la coalescence est schématisé à la Figure 1. Si la quantité de liquide miscible injectée est suffisante, la séparation de phase est totale.

Le solvant miscible étant :
- de l'eau lorsque la phase continue est un alcool de formule R-OH où R est une chaîne hydrocarbonée en C₁ à C₄, ou
- un alcool de formule R-OH où R est une chaîne hydrocarbonée en C₁ à C₈, et de préférence en C₁ à C₄, lorsque la phase continue est de l'eau.

La quantité de solvant miscible ajoutée pour démulsifier totalement le système dépend du taux d'adsorption des nanoparticules à la surface des gouttelettes : plus ce taux est élevé, plus il sera difficile de séparer totalement les phases. Si ce taux est supérieur à 80%, la coalescence ne peut pas être déclenchée ou ne sera pas totale. De préférence, le taux d'adsorption des nanoparticules à la surface des gouttelettes est compris entre 10 et 80%, et de préférence entre 40 et 60%. L'ajout d'une quantité de solvant miscible entre 10 et 20% en volume par rapport au volume de la phase continue suffit généralement à déclencher le mécanisme de coalescence. Pour atteindre la séparation totale des deux phases, il peut être nécessaire soit d'agiter plus fortement le système, par agitation mécanique par exemple, soit d'augmenter la quantité de solvant miscible ajoutée. En l'absence d'agitation, la quantité de solvant miscible nécessaire pour atteindre la séparation totale des phases est généralement comprise entre 40 et 70% en volume par rapport au volume total de la phase continue. D'une manière générale, la quantité de solvant miscible peut être comprise entre 10 et 70%, et de préférence entre 10 et 50%, en volume par rapport au volume de la phase continue, et elle peut être comprise entre 5 et 50% en volume par rapport au volume de la phase discontinue.

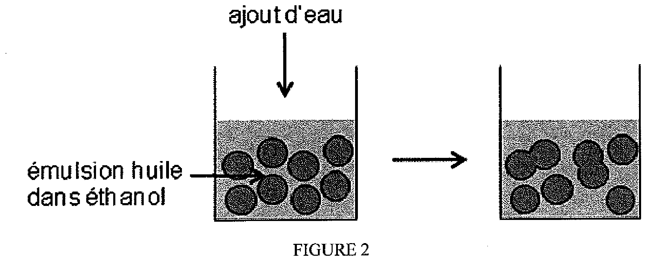

Selon un mode de réalisation particulier, dans le cas où la phase discontinue est dispersée dans un alcool, la coalescence déclenchée par le solvant miscible peut être bloquée pour conduire à la formation de gouttelettes non sphériques. La Figure 2 illustre le cas particulier d'une émulsion huile dans éthanol déstabilisée par un ajout d'un peu eau.

La coalescence bloquée est un phénomène en partie réversible, ce qui signifie qu'il est possible, dans certains cas, de faire relaxer les gouttelettes non sphériques obtenues pour qu'elles retrouvent une forme sphérique. Pour cela, les gouttelettes non sphériques obtenues lors de la coalescence bloquée doivent être rincées, par exemple à l'aide d'une solution alcoolique, comme par exemple une solution d'éthanol. La quantité d'alcool utilisée peut être au moins égale à cinq fois le volume de la phase continue. Après cette étape de rinçage, on obtient des gouttelettes parfaitement sphériques, légèrement plus grosses que dans l'émulsion initiale. La formation de gouttelettes non sphériques est à nouveau possible par exemple par ajout d'eau, ce qui déclenche une deuxième coalescence bloquée. Ces cycles peuvent être répétés plusieurs fois, jusqu'à cinq ou six fois, sans difficulté.

Le procédé de l'invention peut être utilisé pour confiner pendant une période de stockage de durée arbitraire des phases incompatibles dont le mélange est nécessaire aux propriétés d'usage du produit fini. Ceci peut être le cas dans les domaines de la cosmétique, de l'industrie alimentaire et de la pharmacologie pour la préparation *in situ* de principes actifs non stables dans le temps.

Le procédé de l'invention peut également comprendre une étape supplémentaire de séparation (ou démulsification) des phases continue et discontinue : après décantation, on récupère l'une des deux phases par pompage. Il peut notamment s'agir d'un procédé de séparation d'hydrocarbures pour l'extraction d'hydrocarbures dans lequel la phase continue est de l'eau, la phase discontinue est constituée d'un mélange d'hydrocarbures ou de pétrole, les nanoparticules sont des nanoparticules naturelles présentes dans le sol comme par exemple de l'argile, et le solvant miscible est un alcool, comme par exemple l'éthanol.

La présente invention concerne aussi un procédé de fabrication de substrats poreux comprenant les étapes (i) et (ii) telles que définies ci-dessus, suivies d'une étape de séchage de la phase coalescée obtenue à l'issue de l'étape (ii). Ladite étape de séchage peut être réalisée à l'étuve à une température comprise entre 20 et 60°C, pendant 15 à 30 heures. Après évaporation complète des phases liquides de l'émulsion, le résidu est constitué de particules solides agrégées pouvant former une matrice. Les propriétés de la matrice finale (porosité, rigidité, surface spécifique) dépendent fortement de la taille et de la forme des gouttelettes de l'émulsion initiale. Le séchage d'émulsions constituées de gouttelettes non sphériques permet donc l'obtention de matériaux poreux aux propriétés originales. Les matériaux obtenus peuvent notamment être des supports de catalyseurs, des capteurs de gaz et d'humidité, des matériaux de filtration ou des matériaux anisotropes tels que des cristaux photoniques.

Enfin, un autre objet de l'invention concerne un procédé de fabrication de matériaux finis comprenant les étapes (i) et (ii) telles que définies ci-dessus, dans lequel la phase discontinue est un oligomère (méth)acrylate, suivies d'une étape de polymérisation, de préférence réalisée sous irradiations UV.

Outre les dispositions qui précèdent, l'invention comprend encore d'autres dispositions qui ressortiront du complément de description qui suit, qui se rapporte à des exemples mettant en évidence les propriétés avantageuses du procédé de l'invention, ainsi qu'aux figures annexées dans lesquelles :
- la Figure 1 illustre le procédé de l'invention, la coalescence étant déclenchée par ajout d'un liquide miscible dans la phase continue,
- La Figure 2 illustre la déstabilisation d'une émulsion d'huile dans de l'éthanol par ajout d'un peu d'eau dans la phase continue,
- la Figure 3 représente une puce microfluidique : A) Vue de dessus, et B) Vue en coupe (suivant les pointillés de la vue de dessus),
- la Figure 4 représente l'état de dispersion de nanoparticules par mesure de leur diamètre hydrodynamique par diffusion dynamique de la lumière.
- la Figure 5 indique les pourcentages volumiques de liquide miscible à ajouter dans une phase continue d'éthanol dans laquelle est dispersée une huile fluorée stabilisée par des nanoparticules de silice, pour déclencher la coalescence (exprimés en pourcentage de fonctions silanols résiduelles, 100% correspondant aux nanoparticules les plus hydrophiles).

### PARTIE EXPERIMENTALE

### Exemple 1 : Procédé de déstabilisation d'une émulsion de Pickering selon l'invention

### Synthèse de nanoparticules de silice :

Les nanoparticules de silice utilisées pour la stabilisation de l'émulsion sont synthétisées dans un bécher à double parois de 20 mL muni d'un agitateur magnétique, thermostaté à l'aide d'une circulation d'eau régulée à une température de 60°C. 20 mL d'une solution aqueuse d'arginine ayant une concentration de 6.10⁻³ mol.L⁻¹ sont ensuite ajoutés. Après 15 minutes d'agitation, 537 mmol de tétraéthoxysilane sont introduits dans le bécher. L'agitation est ensuite maintenue à une vitesse de 500 tours par minute, pendant une durée de 48 heures.

Les nanoparticules de SiO₂, obtenues ont les caractéristiques suivantes :
- un diamètre compris entre 10 et 20 nm,
- une très faible polydispersité, la distribution de taille est gaussienne avec une déviation standard s = 0,8 nm,
- une densité de 2,2 g.cm⁻³.

La surface des nanoparticules est recouverte de groupements silanols Si-OH, ce qui leur confère un caractère hautement hydrophile. Afin que les nanoparticules puissent s'adsorber à l'interface des phases dispersée et continue, il est nécessaire de les rendre partiellement hydrophobes. Cette modification est décrite dans le mode opératoire ci-dessous.

### Modification de la surface des nanoparticules :

200 mL de la suspension de nanoparticules précédemment préparée sont placés dans un flacon, muni d'un barreau aimanté. 1 mL de triméthyléthoxysilane sont ensuite ajoutés. Le mélange est agité à 750 tours par minute à l'aide d'un agitateur magnétique pendant une durée de 8 heures.

Les nanoparticules greffées sont ensuite lavées avec de l'eau et le solvant de dispersion éliminé par ultrafiltration sous pression à l'aide d'une membrane de 30 kD. Trois rinçages sont ensuite effectués avec 50 mL d'eau pure pour éliminer totalement le solvant de synthèse.

### Préparation de l'émulsion de Pickering :

Différentes émulsions de Pickering ont été préparées selon des modes de préparation distincts.

Dans ces émulsions :
- la phase continue est soit de l'eau, soit de l'éthanol comprenant des nanoparticules de silice telle que préparée ci-dessus, à une concentration de 0,4 g.L⁻¹,
- la phase dispersée est une huile fluorée : le perfluorotripropylamine FC-3283 (3M France).

### 1^{er} mode de préparation : utilisation d'un dispositif d'agitation mécanique

La suspension de nanoparticules de silice précédemment formée est diluée à une concentration de 0,4 g.L⁻¹.

Les deux phases à émulsionner sont placées dans un pilulier, puis agitées vigoureusement selon différentes méthodes :
- par agitation manuelle pendant une durée de 30 secondes,
- par agitation mécanique à l'aide d'un homogénéiseur haute pression IKA Ultraturax^{®} T8.01 pendant 10 secondes à 25 000 tours/minute,
- par agitation manuelle pendant 10 secondes pour former une dispersion grossière, puis ultrasonication du mélange avec un appareillage Bioblock Scientific 88169 pendant 1 minute.

La concentration phase discontinue/phase continue de l'émulsion est de 10%, et le ratio en poids phase discontinue/nanoparticules de 250.

### 2^{ème} mode de préparation : utilisation d'un dispositif microfluidique

La suspension de nanoparticules de silice précédemment formée est diluée à une concentration de 0,4 g.L⁻¹.

Les deux phases à émulsionner sont injectées dans une puce microfluidique, puis cisaillés au niveau d'une jonction de largeur 50 µm et de hauteur 10 µm. Dans ce mode de réalisation, le cisaillement local est contrôlé, ce qui permet une bonne reproductibilité lors de la formation des gouttelettes, ces dernières étant par conséquent monodisperses.

Plusieurs géométries de cisaillement déjà décrits dans la littérature peuvent être utilisées, comme par exemple les écoulements convergents dit flow focusing (Anna et al., Appl. Phys. Lett., Vol. 82, No. 3, 20 January 2003), les écoulements coaxiaux (Umbanhowar et al., Langmuir, Vol. 16, No. 2, 2000), les écoulements en jonction T et les écoulements en terrasse (Kobayashi et al., Colloids and Surfaces A : Physicochem. Eng. Aspects 296 (2007) 285-289). Dans cet exemple, une géométrie de cisaillement hybride telle que celle décrite par Mallogi et al. (Appl. Phys. Lett., Vol. 82, No. 3, 20, January 2010) a été utilisée. Trois seringues comportant les deux phases non miscibles (une seringue contenant la phase dispersée et deux seringues contenant la phase continue avec les nanoparticules de silice modifiées) sont placées sur trois pousses seringues. Les fluides sont dispensés à débit imposés :
- Q_{phase dispersée} = 0,3 µL/min,
- Q_{phase continue 1} = 7 µL/min,
- Q_{phase continue 2} = 1,5 µL/min.

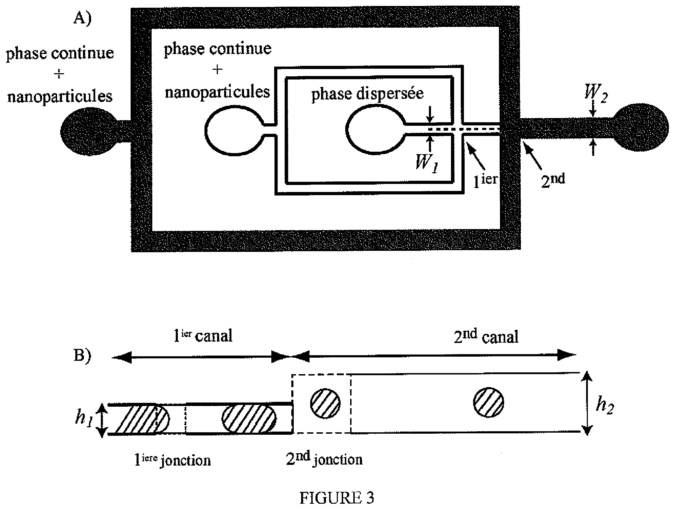

La puce microfluidique est représentée à la Figure 3. La phase à disperser est cisaillée au niveau d'un premier écoulement convergent (largeur W₁ = 50 µm, hauteur h₁ = 10 µm) par la phase continue contenant les nanoparticules modifiées. Les gouttelettes formées débouchent dans un nouvel écoulement convergent plus large et plus haut (largeur W₂ = 100 µm, hauteur h₂ = 100 µm). Les gouttelettes sont alors entrainées par une nouvelle arrivée de phase continue contenant les nanoparticules modifiées sur une distance de plusieurs dizaines de centimètres afin que les nanoparticules puissent s'adsorber de manière efficace sur la surface des gouttelettes, et ce avant que les gouttelettes ne rentrent en contact les unes avec les autres. Le temps de résidence est de l'ordre de vingt secondes, ce qui est suffisant pour que la quantité de nanoparticules adsorbées empêche la coalescence des gouttelettes formées. L'émulsion de Pickering ainsi formée, dont la concentration phase discontinue/phase continue est de 3% et le ratio en poids phase discontinue/nanoparticules de 75, est collectée directement en sortie de la puce microfluidique et stockée pour une utilisation ultérieure.

### Déclenchement de la coalescence de l'émulsion :

La couche de nanoparticules est déstabilisée par modification de la balance hydrophile/hydrophobe de la phase continue :
- soit par ajout d'eau dans l'éthanol à l'aide d'une micropipette, de manière à rendre la phase continue plus hydrophile,
- soit par ajout d'éthanol dans l'eau à l'aide d'une micropipette, pour rendre la phase continue plus hydrophobe.

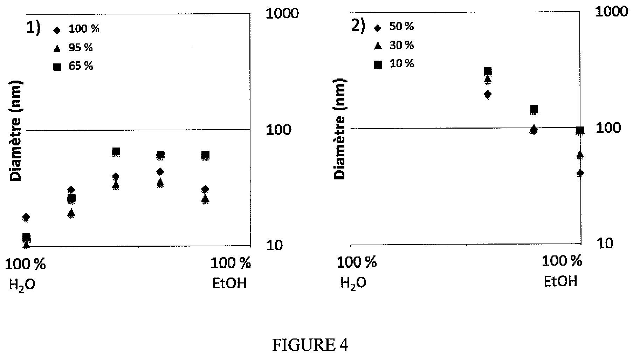

L'état de dispersion des nanoparticules est alors modifié et conduit à la formation d'agrégats, comme le montre la Figure 4. Les nanoparticules initialement dispersées dans l'eau s'agrègent lorsque l'on ajoute de l'éthanol (1^{er} graphe), et les nanoparticules initialement dispersées dans l'éthanol s'agrègent lorsque l'on ajoute de l'eau (2^{ème} graphe).

### Formation de gouttelettes non sphériques :

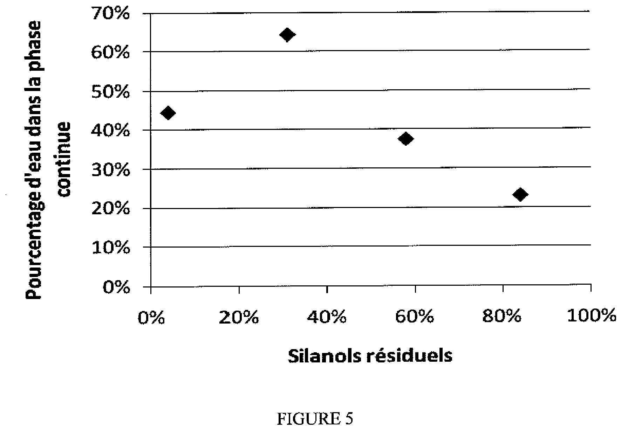

La Figure 5 indique les pourcentages volumiques de liquide miscible à ajouter dans une phase continue pour déclencher la coalescence, dans le cas d'émulsions d'huile fluorée dispersée dans l'éthanol.

On observe que la quantité d'eau à ajouter augmente avec l'hydrophobie des particules, puis diminue pour des particules très hydrophobes.

### Exemple 2 : Procédé d'extraction d'hydrocarbures

Dans un pilulier de 8 mL, on incorpore 2 mL d'une solution aqueuse comprenant de l'eau H₂O, 10 g.L⁻¹ de chlorure de sodium NaCl et 4 g.L⁻¹ de nanoparticules de silice, et 2 mL d'hexadécane.

L'émulsion est formée par agitation mécanique à l'aide d'un homogénéiseur haute pression IKA Ultraturax T8.01 pendant une durée de 2 minutes à 25 000 tours/minute.

La concentration phase discontinue/phase continue de l'émulsion est de 50%, et le ratio en poids phase continue/nanoparticules de 450.

L'émulsion formée est ensuite agitée avec un agitateur magnétique à 250 rpm. De l'éthanol (le solvant miscible) est ensuite injecté dans l'émulsion de Pickering précédemment préparée en plongeant un capillaire dans le pilulier et en appliquant un débit de 10⁻³ m³/h pour un volume total d'éthanol égal à 50% de la phase continue.

La phase dispersée, *i.e.* l'hexadécane, n'est plus sous forme d'émulsion : deux phases se sont formées dans le pilulier. L'hexadécane, plus léger, se situe au-dessus de l'eau. On récupère l'hexadécane à l'aide d'une pipette Pasteur.

### Exemple 3 : Procédé de fabrication d'un filtre

Dans un pilulier de 8 mL, on incorpore 2 mL d'une solution aqueuse comprenant de l'eau H₂O, 10 g.L⁻¹ du chlorure de sodium et 10 g.L-1 de nanoparticules de silice, et 2 mL d'un oligomère (méth)acrylate polymérisable, le 1,6-hexanediol diacrylate, ainsi que 1% en poids de 2-hydroxy-2-méthylpropiophénone.

L'émulsion est formée par agitation mécanique à l'aide d'un homogénéiseur haute pression IKA Ultraturax T8.01 pendant une durée de 2 minutes à 25 000 tours/minutes.

La concentration phase discontinue/phase continue de l'émulsion est de 50%, et le ratio en poids phase continue/nanoparticules de 180.

L'émulsion formée est ensuite agitée avec un agitateur magnétique à 250 rpm. De l'éthanol (le solvant miscible) est ensuite injecté dans l'émulsion de Pickering précédemment préparée en plongeant un capillaire dans le pilulier et en appliquant un débit de 10⁻⁴ m³/h pour un volume totale de solvant égal à 5% de la phase continue, ceci afin de former des gouttelettes non sphériques.

Le pilulier est ensuite placé sous une lampe UV Hamamatsu LC8 (4500 mW.cm⁻², longueur d'onde 300 nm - 450 nm) pendant 1 minute. On obtient ainsi des particules qui sont ensuite récupérées, puis séchées à l'étuve à une température de 50°C pendant 24 heures. La poudre ainsi séchée est ensuite utilisée pour préparer un filtre.

## Revendications

1. Procédé de déstabilisation d'une émulsion de Pickering **caractérisé en ce qu'**il comprend les étapes suivantes :
(i) la préparation d'une émulsion de Pickering comprenant :
- une phase continue choisie parmi l'eau ou un alcool de formule R-OH où R est une chaîne hydrocarbonée en C₁ à C₄, dans laquelle des nanoparticules sont mises en suspension, et
- une phase discontinue, qui est un liquide non miscible dispersé dans ladite phase continue sous forme de gouttelettes,
(ii) l'injection dans la phase continue d'un solvant miscible avec ladite phase, de manière à déclencher une coalescence entre les phases continue et discontinue,
le ratio en poids phase discontinue/nanoparticules étant compris entre 4 et 20 000, et de préférence entre 100 et 10 000,
le solvant miscible étant :
- de l'eau lorsque la phase continue est un alcool de formule R-OH où R est une chaîne hydrocarbonée en C₁ à C₄, ou
- un alcool de formule R-OH où R est une chaîne hydrocarbonée en C₁ à C₄ lorsque la phase continue est de l'eau.

2. Procédé selon la revendication 1, dans lequel la phase discontinue est une huile minérale, une huile fluorée, un acide gras ou un oligomère (méth)acrylate, et de préférence une huile minérale constituée d'un mélange d'hydrocarbures, ou un oligomère (méth)acrylate choisi parmi le tri(propylène glycol) diacrylate (TPGDA), l'éthylène glycol diméthacrylate, le poly(éthylène glycol) diacrylate (PEGDA), le pentaérythritol triacrylate, le triméthylolpropane triacrylate (TMPTA) et le 1,6-hexanediol diacrylate.

3. Procédé selon l'une des revendications 1 à 2, dans lequel la quantité de solvant miscible injectée lors de l'étape (ii) représente entre 10 et 70% en volume par rapport au volume total de la phase continue.

4. Procédé selon l'une des revendications 1 à 3, dans lequel les nanoparticules sont choisies parmi les nanoparticules de silice, d'or, d'oxyde de fer, d'oxyde de cérium, de dioxyde de titane, d'argile ou les quantums dots.

5. Procédé selon l'une des revendications 1 à 4, dans lequel les nanoparticules ont un diamètre compris entre 10 et 50 nm.

6. Procédé selon l'une des revendications 1 à 5, dans lequel la concentration en nanoparticules est comprise entre 0,1 et 20 g.L⁻¹.

7. Procédé selon l'une des revendications 1 à 6, dans lequel les nanoparticules sont des nanoparticules de silice modifiées en surface par ethérification des groupements silanols par un alcool, ou par greffage à leur surface d'un organosilane.

8. Procédé selon la revendication 7, dans lequel l'organosilane est un organoaloxysilane.

9. Procédé selon la revendication 7 ou la revendication 8, dans lequel la phase continue est de l'eau et le taux de recouvrement des nanoparticules de silice par l'organosilane est compris entre 5 et 40%.

10. Procédé selon la revendication 7 ou la revendication 8, dans lequel la phase continue est un alcool de formule R-OH où R est une chaîne hydrocarbonée en C₁ à C₄ et le taux de recouvrement des nanoparticules de silice par l'organosilane est compris entre 40 et 85%.

11. Procédé selon l'une des revendications 1 à 10 **caractérisé en ce qu'**il comprend une étape supplémentaire de séparation par pompage soit de la phase continue, soit de la phase discontinue.

12. Procédé selon la revendication 11 **caractérisé en ce qu'**il s'agit d'un procédé de séparation d'hydrocarbures dans lequel la phase continue est de l'eau, la phase discontinue est un mélange d'hydrocarbures, les nanoparticules sont des nanoparticules naturelles présentes dans le sol, et le solvant miscible est un alcool.

13. Procédé de fabrication de substrats poreux **caractérisé en ce qu'**il comprend les étapes (i) et (ii) telles que définies selon l'une des revendications 1 à 10, suivie d'une étape de séchage de la phase coalescée obtenue à l'issue de l'étape (ii).

14. Procédé de fabrication de matériaux finis **caractérisé en ce qu'**il comprend une étape les étapes (i) et (ii) telles que définies selon l'une des revendications 1 à 10, suivie d'une étape de polymérisation sous irradiations UV, et **en ce que** la phase discontinue est un oligomère (méth)acrylate.

## Patentansprüche

1. Verfahren zur Destabilisierung einer Pickering-Emulsion, **dadurch gekennzeichnet, dass** es die folgenden Schritte umfasst:
(i) Herstellen einer Pickering-Emulsion, umfassend:
- eine kontinuierliche Phase, ausgewählt aus Wasser oder einem Alkohol mit der Formel R-OH, wobei R eine C₁ bis C₄-Kohlenwasserstoffkette ist, in der Nanopartikel suspendiert werden, und
- eine diskontinuierliche Phase, wobei es sich um eine nicht mischbare Flüssigkeit handelt, die in der kontinuierlichen Phase in Form von Tröpfchen verteilt ist,
(ii) Einspritzen in die kontinuierliche Phase eines Lösemittels, das mit der Phase mischbar ist, um eine Koaleszenz zwischen der kontinuierlichen Phase und der diskontinuierlichen Phase auszulösen,
wobei das Gewichtsverhältnis diskontinuierliche Phase/Nanopartikel im Bereich zwischen 4 und 20 000 und vorzugsweise zwischen 100 und 10 000 liegt,
wobei das mischbare Lösemittel wie folgt ist:
- Wasser, wenn die kontinuierliche Phase ein Alkohol mit der Formel R-OH ist, wobei R eine C₁ bis C₄-Kohlenwasserstoffkette ist, oder
- ein Alkohol mit der Formel R-OH, wobei R eine C₁ bis C₄-Kohlenwasserstoffkette ist, wenn die kontinuierliche Phase Wasser ist.

2. Verfahren nach Anspruch 1, wobei die diskontinuierliche Phase ein Mineralöl ist, ein fluoriertes Öl, eine Fettsäure oder ein (Meth)acrylatoligomer, und vorzugsweise ein Mineralöl, bestehend aus einer Mischung von Kohlenwasserstoffen, oder ein (Meth)acrylatoligomer, ausgewählt aus Tri(propylenglycol)diacrylat (TPGDA), Ethylenglycoldimethacrylat, Poly(ethylenglycol)diacrylat (PEGDA), Pentaorythritoltriacrylat, Trimethylolpropantriacrylat (TMPTA) und 1,6-Hexandioldiacrylat.

3. Verfahren nach einem der Ansprüche 1 bis 2, wobei die Menge von mischbarem Lösemittel, die bei Schritt (ii) injiziert wird, zwischen 10 und 70 Vol.% mit Bezug auf das Gesamtvolumen der kontinuierlichen Phase darstellt.

4. Verfahren nach einem der Ansprüche 1 bis 3, wobei die Nanopartikel ausgewählt sind aus den Nanopartikeln von Siliziumdioxid, Gold, Eisenoxyd, Zeroxid, Titandioxid, Ton oder Quantumpunkten.

5. Verfahren nach einem der Ansprüche 1 bis 4, wobei die Nanopartikel einen Durchmesser im Bereich zwischen 10 und 50 nm aufweisen.

6. Verfahren nach einem der Ansprüche 1 bis 5, wobei die Konzentration von Nanopartikeln im Bereich zwischen 0,1 und 20 g.L⁻¹ liegt.

7. Verfahren nach einem der Ansprüche 1 bis 6, wobei die Nanopartikel Nanopartikel von Siliziumdioxid sind, die auf der Oberfläche durch Veresterung der Silanolgruppen durch einen Alkohol oder durch Pfropfen eines Organosilans an ihre Oberfläche modifiziert sind.

8. Verfahren nach Anspruch 7, wobei das Organosilan ein Organoaloxysilan ist.

9. Verfahren nach Anspruch 7 oder Anspruch 8, wobei die kontinuierliche Phase Wasser ist und die Abdeckungsrate der Nanopartikel von Siliziumdioxid durch das Organosilan im Bereich zwischen 5 und 40 % liegt.

10. Verfahren nach Anspruch 7 oder Anspruch 8, wobei die kontinuierliche Phase ein Alkohol mit der Formel R-OH ist, wobei R eine C₁ bis C₄-Kohlenwasserstoffkette ist und die Abdeckungsrate der Nanopartikel von Siliziumdioxid durch das Organosilan im Bereich zwischen 40 und 85 % liegt.

11. Verfahren nach einem der Ansprüche 1 bis 10, **dadurch gekennzeichnet, dass** es einen zusätzlichen Schritt des Trennens durch Pumpen entweder der kontinuierlichen Phase oder der diskontinuierlichen Phase umfasst.

12. Verfahren nach Anspruch 11, **dadurch gekennzeichnet, dass** es sich um ein Verfahren des Trennens von Kohlenwasserstoffen handelt, wobei die kontinuierliche Phase Wasser ist, die diskontinuierliche Phase eine Mischung von Kohlenwasserstoffen ist, die Nanopartikel natürliche Nanopartikel sind, die im Boden vorhanden sind, und das mischbare Lösemittel ein Alkohol ist.

13. Verfahren zur Herstellung von porösen Substraten, **dadurch gekennzeichnet, dass** es die Schritte (i) und (ii) umfasst, wie nach einem der Ansprüche 1 bis 10 definiert, gefolgt von einem Schritt des Trocknens der koalierten Phase, die am Ausgang von Schritt (ii) erhalten wird.

14. Verfahren zur Herstellung von fertigen Materialien, **dadurch gekennzeichnet, dass** es die Schritte (i) und (ii) umfasst, wie nach einem der Ansprüche 1 bis 10 definiert, gefolgt von einem Schritt des Polymerisierens unter UV-Strahlungen, und dadurch, dass die diskontinuierliche Phase ein (Meth)acrylatoligomer ist.

## Claims

1. Method for destabilising a Pickering emulsion **characterised in that** it comprises the following steps:
(i) the preparing of a Pickering emulsion comprising:
- a continuous phase chosen from water or an alcohol of formula R-OH where R is a C₁ to C₄ hydrocarbon chain, in which nanoparticles are suspended, and
- a discontinuous phase, which is an immiscible liquid dispersed in said continuous phase in the form of droplets,
(ii) the injecting into the continuous phase of a miscible solvent with said phase, in such a way as to trigger a coalescence between the continuous and discontinuous phases,
the discontinuous phase/nanoparticle weight ratio is between 4 and 20,000, and preferably between 100 and 10,000,
with the miscible solvent being:
- water when the continuous phase is an alcohol of formula R-OH where R is a C₁ to C₄ hydrocarbon chain, or
- an alcohol of formula R-OH where R is a C₁ to C₄ hydrocarbon chain when the continuous phase is water.

2. Method according to claim 1, wherein the discontinuous phase is a mineral oil, a fluorinated oil, a fatty acid or a (meth)acrylate oligomer, and preferably a mineral oil consisting of a mixture of hydrocarbons, or a (meth)acrylate oligomer chosen from tri(propylene glycol) diacrylate (TPGDA), ethylene glycol dimethacrylate, poly(ethylene glycol) diacrylate (PEGDA), pentaerythritol triacrylate, trimethylolpropane triacrylate (TMPTA) and 1,6-hexanediol diacrylate.

3. Method according to one of claims 1 to 2, wherein the quantity of miscible solvent injected during the step (ii) represents between 10 and 70% by volume with respect to the total volume of the continuous phase.

4. Method according to one of claims 1 to 3, wherein the nanoparticles are chosen from the nanoparticles of silica, gold, iron oxide, cerium oxide, titanium dioxide, clay or quantum dots.

5. Method according to one of claims 1 to 4, wherein the nanoparticles have a diameter between 10 and 50 nm.

6. Method according to one of claims 1 to 5, wherein the concentration in nanoparticles is between 0.1 and 20 g.L⁻¹.

7. Method according to one of claims 1 to 6, wherein the nanoparticles are nanoparticles of silica modified on the surface by etherification of the silanol groups by an alcohol, or by grafting an organosilane to their surface,

8. Method according to claim 7, wherein the organosilane is an organoaloxysilane.

9. Method according to claim 7 or claim 8, wherein the continuous phase is water and the coverage rate of the nanoparticles of silica by the organosilane is between 5 and 40%.

10. Method according to claim 7 or claim 8, wherein the continuous phase is an alcohol of formula R-OH where R is a C₁ to C₄ hydrocarbon chain and the coverage rate of the nanoparticles of silica by the organosilane is between 40 and 85%.

11. Method according to one of claims 1 to 10 **characterised in that** it comprises an additional step of separating via pumping either of the continuous phase, or of the discontinuous phase.

12. Method according to claim 11 **characterised in that** it is a method for separating hydrocarbons wherein the continuous phase is water, the discontinuous phase is a mixture of hydrocarbons, the nanoparticles are natural nanoparticles present in the soil, and the miscible solvent is an alcohol.

13. Method for manufacturing porous substrates **characterised in that** it comprises the steps (i) and (ii) such as defined according to one of claims 1 to 10, followed by a step of drying of the coalesced phase obtained at the end of the step (ii).

14. Method for manufacturing finished products **characterised in that** it comprises a step the steps (i) and (ii) such as defined according to one of claims 1 to 10, followed by a step of polymerisation under UV irradiation, and **in that** the discontinuous phase is a (meth)acrylate oligomer.
